# EUROPEAN PATENT APPLICATION

(11) **EP 2 397 828 A1**
(43) Date of publication of application: **21.12.2011**
(21) Application number: 10755591.4
(22) Date of filing: 08.03.2010
(51) Int. Cl.: G01L 1/10

(54) **PHYSICAL QUANTITY SENSOR**

(30) Priority: 27.03.2009 JP 2009078418
(71) Applicant: Panasonic Corporation, Kadoma-shi Osaka 571-8501 (JP)
(72) Inventor: MATSUURA, Akira, Osaka-shi, Osaka 540-6207 (JP); OHKOSHI, Hideo, Osaka-shi, Osaka 540-6207 (JP); NAKANISHI, Tsutomu, Osaka-shi, Osaka 540-6207 (JP); KAWAI, Takashi, Osaka-shi, Osaka 540-6207 (JP)
(74) Representative: Kügele, Bernhard
(86) International application number: PCT/JP2010/001588
(87) International publication number: WO 2010/109787

(57) **Abstract**

A physical quantity sensor includes a deformable body in which strain occurs in response to a stress applied thereto, a vibrator vibrating with a frequency according to the strain or with an amplitude according to the strain, and a processor processing a signal output from the vibrator. The vibrator is mounted to the deformable body such that the strain transmits to the vibrator. The processor is bonded to the deformable body such that the strain does not substantially transmit to the processor. This physical quantity sensor can stably detects strain and tension acting on an object.

## Description

### TECHNICAL FIELD

The present invention relates to a physical quantity sensor for detecting strain and tension acting on an object.

### BACKGROUND ART

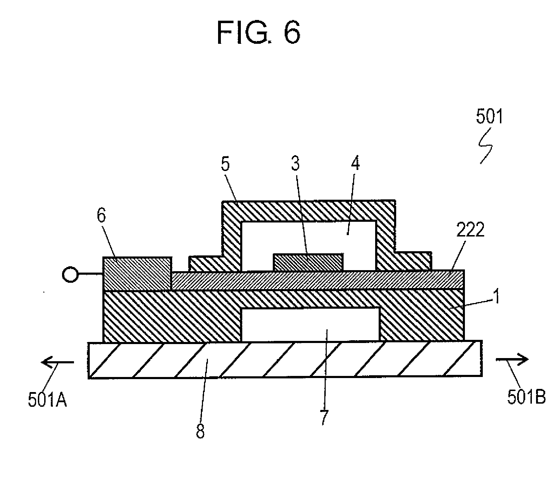

Physical quantity sensors of high performance and small size for detecting strain and tension acting on an object, have been recently developed by applying a micromachine technologies. Fig. 6 is a cross-sectional view of conventional physical quantity sensor 501 described in Patent Literature 1. Insulating layer 222 made of silicon oxide or silicon nitride is formed on a surface of semiconductor substrate 1 made of material including silicon. A vibration-element portion which has lower electrode 3 and upper electrode 5 made of polysilicon or metal are formed on a surface of insulating layer 222. Upper electrode 5 is an elastic body having a ribbon shape, and has both ends in longitudinal direction fixed to the surface of insulating layer 222. A central portion of upper electrode 5 faces lower electrode 3 via cavity 4. Electronic circuit 6 with the vibration-element portion is formed unitarily on semiconductor substrate 1. Cavity 7 is provided in a substantially central portion of semiconductor substrate 1. Both lateral sides of cavity 7 are fixed to object 8 to be measured in strain and tension. A portion of semiconductor substrate 1 located above cavity 7 is thin.

When an alternating-current voltage having a frequency equal to a natural frequency of the central portion of upper electrode 5 is applied between lower electrode 3 and upper electrode 5 of the vibration-element portion, the central portion of upper electrode 5 resonates and vibrate with a specific frequency and amplitude. This is caused by an interaction of an elastic stress of upper electrode 5 with an electrostatic attraction generated between lower electrode 3 and upper electrode 5. While the vibration-element portion vibrates, when an elongation strain occurs in object 8 in directions 501A and 501B, a distance between both the ends of upper electrode 5 fixed to semiconductor substrate 1 via insulating layer 222 is enlarged in the same directions 501A and 501B. Since the portion of semiconductor substrate 1 located above cavity 7 is thin, the strain occurring in the central portion of upper electrode 5 is larger than that occurring in both the lateral side portions of cavity 7. Thus, a tension is applied in the central portion of upper electrode 5 and changes the frequency or amplitude of the vibration of the central portion of upper electrode 5. The variations in frequency or amplitude of the vibration with electronic circuit 6 are processed to determine the strain and tension occurring in object 8.

However, in conventional physical quantity sensor 501, since electronic circuit 6 is unitarily formed on semiconductor substrate 1, the strain occurring in both the lateral side portions of cavity 7 may change circuit constants of circuit elements, such as resistors, that configure electronic circuit 6. The change will make the circuit unstable, leading to a possible malfunction thereon. Moreover, since the vibration-element portion and electronic circuit 6 are exposed, moisture or dust can adhere to the vibration-element portion and electronic circuit 6, thereby preventing the sensor from functioning.

### CITATION LIST

### Patent Literature

Patent Literature 1: Japanese Patent Laid-Open Publication No.07-333077

### SUMMARY OF THE INVENTION

A physical quantity sensor includes a deformable body in which strain occurs in response to a stress applied thereto, a vibrator vibrating with a frequency according to the strain or with an amplitude according to the strain, and a processor processing a signal output from the vibrator. The vibrator is mounted to the deformable body such that the strain transmits to the vibrator. The processor is bonded to the deformable body such that the strain does not substantially transmit to the processor.

This physical quantity sensor can stably detects strain and tension acting on an object.

### BRIEF DESCRIPTION OF DRAWINGS

Fig. 1A is a top view of a physical quantity sensor according to an exemplary embodiment of the present invention.
Fig. 1B is a side view of the physical quantity sensor according to the embodiment.
Fig. 2 is a cross-sectional view of the physical quantity sensor taken along line 2-2 shown in Fig. 1A.
Fig. 3A is a top view of a vibrator of the physical quantity sensor according to the embodiment.
Fig. 3B is a cross-sectional view of the vibrator taken along line 3B-3B shown in Fig. 3A.
Fig. 3C is a cross-sectional view of the vibrator taken along line 3C-3C shown in Fig. 3A.
Fig. 3D is an enlarged cross-sectional view of the vibrator shown in Fig. 3B.
Fig. 4 is an exploded perspective view of the physical quantity sensor according to the embodiment.
Fig. 5 is an exploded perspective view of another physical quantity sensor according to the embodiment.
Fig. 6 is a cross-sectional view of a conventional physical quantity sensor.

### DETAILED DESCRIPTION OF PREFERRED EMBODIMENT

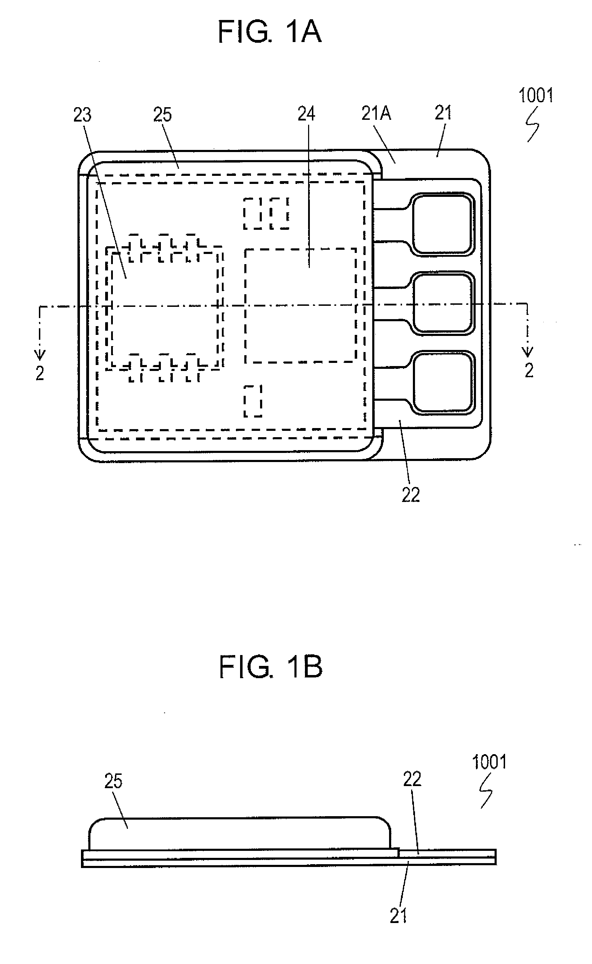

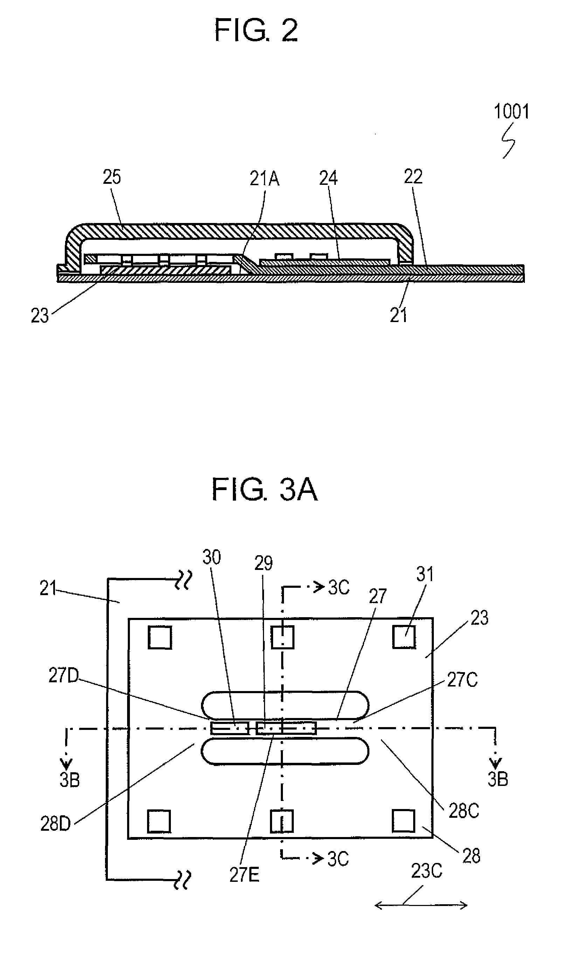

Figs. 1A and 1B are a top view and a side view of physical quantity sensor 1001 according to an exemplary embodiment of the present invention, respectively. Fig. 2 is a cross-sectional view of physical quantity sensor 1001 taken along line 2-2 shown in Fig. 1A. Deformable body 21 is made of metal, such as stainless steel, and generates strain by a stress applied thereto. Flexible substrate 22 made of flexible material, such as polyimide film, is provided on upper surface 21A of deformable body 21. Vibrator 23 and processor 24 are mounted onto flexible substrate 22. Vibrator 23 vibrates with a vibration frequency that changes according to the amount of the strain occurring in deformable body 21. Processor 24 includes electronic components, such as an integrated circuit (IC) and a resistor, and processes a signal output from vibrator 23. Package 25 made of ceramic or metal is mounted to deformable body 21 so as to entirely accommodate and protect vibrator 23 and processor 24.

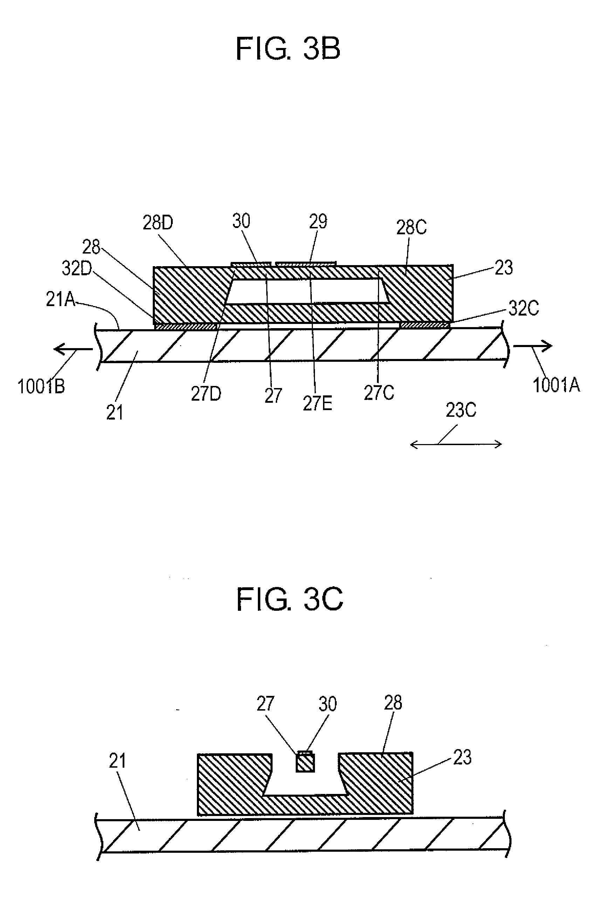

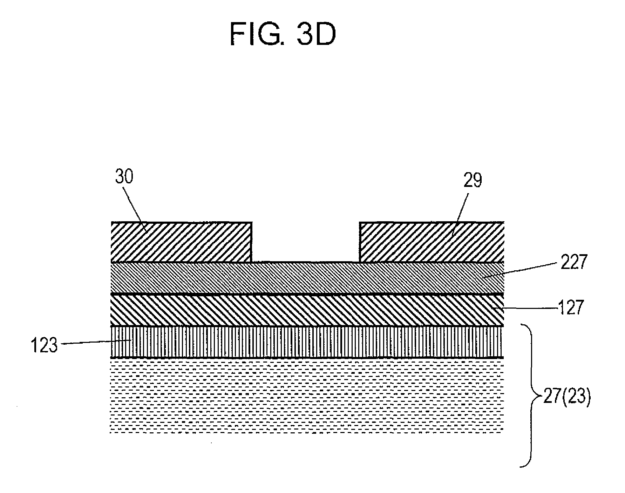

Fig. 3A is a top view of vibrator 23. Fig. 3B is a cross-sectional view of vibrator 23 taken along line 3B-3B shown in Fig. 3A. Fig. 3C is a cross-sectional view of vibrator 23 taken along line 3C-3C shown in Fig. 3A. Fig. 3D is an enlarged cross-sectional view of beam portion 27 of vibrator 23. Insulating layer 123 made of silicon oxide or silicon nitride is formed on a surface of vibrator 23. Vibrator 23 includes: beam portion 27 having a bar shape, and mounting body 28 surrounding beam portion 27. Vibrator 23 including beam portion 27 and mounting body 28 can be formed by etching a semiconductor substrate, such as a silicon substrate. Beam portion 27 extends in longitudinal direction 23C, and has ends 27C and 27D located in opposite to each other. Mounting body 28 has fixing portions 28C and 28D to which ends 27C and 27D are fixed, respectively. Beam portion 27 is configured to vibrate while ends 27C and 27D are fixed to fixing portions 28C and 28D, respectively. Detecting electrode 30 is formed at end 27D of beam portion 27. Driving electrode 29 is formed at central portion 27E between ends 27C and 27D of beam portion 27. Driving electrode 29 and detecting electrode 30 are coupled with lands 31 via wiring patterns. Fixing portions 28C and 28D are joined to deformable body 21 with joining materials 32C and 32D, respectively, thereby fixing vibrator 23,. Joining materials 32C and 32D have a large shear modulus, and allow the strain occurring in deformable body 21 to transmit to vibrator 23. Specifically, joining materials 32C and 32D are made of rigid material, such as metal-based joining material, such as Au-Au junction (having shear modulus of about 30 GPa), and epoxy resin having a shear modulus of about 3 GPa). This configuration provides vibrator 23 with a strain substantially identical to the strain occurring in deformable body 21, hence allowing vibrator 23 to accurately detect the strain occurring in deformable body 21.

As shown in Fig. 3D, vibrator 23 further includes lower electrode 127 disposed on the surface of beam portion 27, and piezoelectric layer 227 composed of a piezoelectric material such as PZT disposed on lower electrode 127. Driving electrode 29 and detecting electrode 30 are disposed on piezoelectric layer 227.

An operation of physical quantity sensor 1001 will be described below. When an alternating-current (AC) voltage having a frequency identical to a natural frequency of beam portion 27 is applied between lower electrode 127 and driving electrode 29, beam portion 27 resonates to perform a string vibration with a specific frequency and amplitude while nodes of the vibration is located at ends 27C and 27D and an antinode is located at central portion 27E.

While vibrator 23 performs the string vibration as described above, when an expanding strain occurs in deformable body 21 in directions 1001A and 1001B opposed to each other along longitudinal direction 23C, fixing portions 28C and 28D are displaced in directions 1001A and 1001B, respectively, to generate strain. Since beam portion 27 is thinner than fixing portions 28C and 28D, larger strain occurs in beam portion 27 than a strain that occurs in mounting body 28. That is, ends 27C and 27D of beam portion 27 are displaced in directions 1001A and 1001B, respectively, to cause tension in beam portion 27. This tension changes the frequency or the amplitude of the string vibration of beam portion 27.

Detecting electrode 30 outputs a signal according to the frequency and amplitude of the vibration. Processor 24 detects the strain occurring in deformable body 21, by sensing the frequency or amplitude of the vibration based on the signal output from detecting electrode 30.

As described above, vibrator 23 is disposed to deformable body 21 such that the strain occurring in deformable body 21 transmits to the vibrator, and the vibrator vibrates with a frequency according to the strain or with amplitude according to the strain. Processor 24 is bonded to deformable body 21 via flexible substrate 22 such that the strain does not substantially transmit to the circuit. The circuit processes the signal output from vibrator 23.

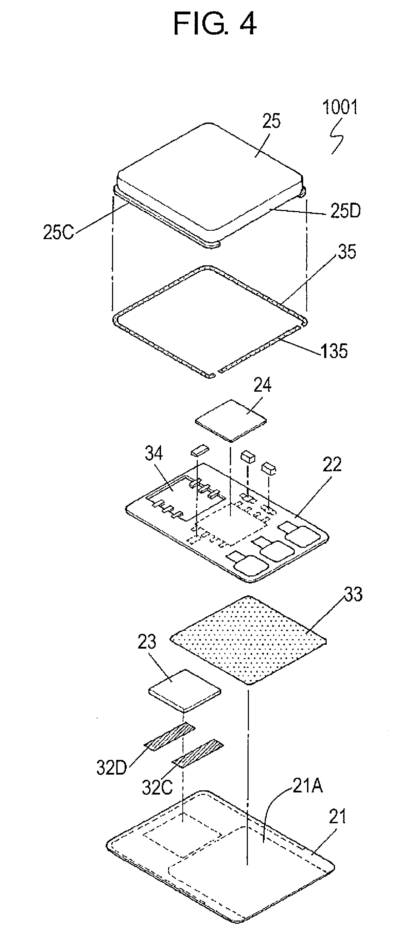

Package 25 is mounted to deformable body 21 such that the strain does not substantially transmit to the package, and accommodates vibrator 23 and processor 24. As shown in Fig. 4, adhesive 35 with a small shear modulus joins package 25 to deformable body 21. Joining materials 32C and 32D joins vibrator 23 to deformable body 21, and have a larger shear modulus than adhesive 35.

Joining materials 32C and 32D with a large shear modulus joins vibrator 23 to deformable body 21. Adhesive 135 bonds processor 24 to deformable body 21 via flexible substrate 22, and has a smaller shear modulus than joining materials 32C and 32D. Processor 24 is mounted onto flexible substrate 22. Adhesive 135 fixes flexible substrate 22 to deformable body 21.

A method of manufacturing physical quantity sensor 1001 will be described below. Fig. 4 is an exploded perspective view of physical quantity sensor 1001.

First, vibrator 23 is fixed to deformable body 21 with joining materials 32C and 32D. Processor 24 including an IC and a resistor is mounted onto flexible substrate 22.

Next, flexible substrate 22 is fixed to deformable body 21 with adhesive 33. Adhesive 33 is made of material, such as silicone resin having shear modulus of about 0.01 GPa, having a smaller shear modulus than that of joining materials 32C and 32D. The adhesive, therefore, does not substantially allow the strain occurring in deformable body 21 to transmit to processor 24. Opening 34 through which vibrator 23 passes is formed in flexible substrate 22. Lands 31 of vibrator 23 are coupled with flexible substrate 22 by wire bonding or inner leads protruding inward from around opening 34. This structure maintains electrical connection of vibrator 23 with flexible substrate 22 even if strain occurs in deformable body 21 to displace flexible substrate 22.

Next, bottom portion 25C and bottom portion 25D of package 25 are fixed to deformable body 21 and flexible substrate 22 with adhesive 35 and adhesive 135, respectively, thereby allowing the package to entirely accommodate and protect vibrator 23 and processor 24. Adhesive 35 is made of material, such as silicone resin, having a smaller shear modulus than materials of joining materials 32C and 32D. This configuration protects vibrator 23 and processor 24 from water and dust. Adhesive 35 can prevent the strain occurring in deformable body 21 from transmitting to package 25. Consequently, package 25 does not restrain the strain occurring in deformable body 21, and allows vibrator 23 to accurately detect the strain occurring in deformable body 21. The height of package 25 is smaller at bottom portion 25C than at bottom portion 25D by the thickness of flexible substrate 22.

Physical quantity sensor 1001 can accurately detect the strain occurring in deformable body 21 with vibrator 23. Adhesive 33 prevents the strain from transmitting to processor 24, and hence, reduces changes of circuit values of circuit elements of processor 24. This stabilizes the detection of strain and tension acting on an object. Moreover, since the strain occurring in deformable body 21 can be absorbed by both flexible substrate 22 and adhesive 33, it is possible to further reduce changes, caused by strain, in circuit values of circuit elements of processor 24. This stabilizes the detection of strain and tension acting on an object.

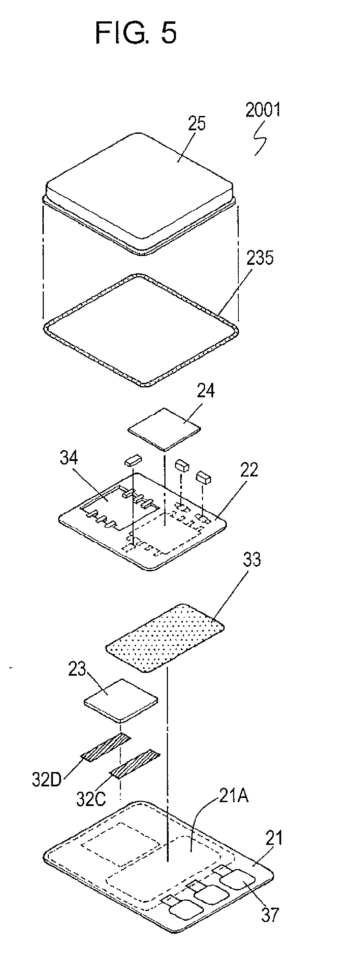

Fig. 5 is an exploded perspective view of another physical quantity sensor 2001 according to the embodiment. In Fig. 5, components identical to those of physical quantity sensor 1001 shown in Fig. 4 are denoted by the same numerals. External connection terminals 37 are disposed at an end portion of deformable body 21. External connection terminals 37 can be formed by applying, by printing, insulating paste of glass on the end portion of deformable body 21, and then printing conductive paste, such as silver paste, on the applied insulating paste. The terminals have a thickness ranging from about 10 µm to 30 µm.

A method of manufacturing physical quantity sensor 2001 will be described below with reference to Fig. 5.

First, vibrator 23 is fixed to deformable body 21 with joining materials 32C and 32D. Processor 24 is mounted to flexible substrate 22.

Next, flexible substrate 22 is fixed to deformable body 21 with adhesive 33. Adhesive 33 is made of material, such as silicone resin having a shear modulus of about 0.01 GPa, having a smaller shear modulus than that of joining materials 32C and 32D. The adhesive, therefore, does not substantially allow the strain occurring in deformable body 21 to transmit to processor 24. Opening 34 through which vibrator 23 passes is formed in flexible substrate 22. Lands 31 of vibrator 23 are coupled with flexible substrate 22 by wire bonding or inner leads protruding inward from around opening 34. This structure maintains the electrical connection of vibrator 23 with flexible substrate 22 even if strain occurring in deformable body 21 displaces flexible substrate 22.

Then, flexible substrate 22 is electrically coupled with external connection terminals 37 by, e.g. wire bonding.

Next, package 25 is fixed over both deformable body 21 and flexible substrate 22 with adhesive 235, such as a silicone resin, having a small shear modulus, thereby allowing the package to entirely accommodate and protect vibrator 23 and processor 24. This configuration protects vibrator 23 and processor 24 from water, dust, and the like. Adhesive 235 can prevent the strain occurring in deformable body 21 from transmitting to package 25. Consequently, package 25 does not reduce the strain occurring in deformable body 21, hence allowing vibrator 23 to accurately detect the strain occurring in deformable body 21. Since external connection terminals 37 are formed by printing on deformable body 21, steps produced where external connection terminals 37 contact package 25 is negligible relative to the thickness of adhesive 235. Therefore, there is no need for locally modifying the height of package 25 by processing the bottom portion thereof.

Physical quantity sensor 2001 can accurately detect the strain occurring in deformable body 21 with vibrator 23. Adhesive 33 prevents the strain from transmitting to processor 24, and hence, reduces changes in circuit values of circuit elements of processor 24, thereby allowing the detection of strain and tension acting on an object stably.

### INDUSTRIAL APPLICABILITY

A physical quantity sensor according to the present invention is useful for a physical quantity sensor accurately detecting strain and tension acting on an object.

### REFERENCE MARKS IN THE DRAWINGS

- 21: Deformable Body
- 22: Flexible Substrate
- 23: Vibrator
- 24: Processor
- 25: Package
- 32C: Joining Material
- 32D: Joining Material
- 33: Adhesive
- 35: Adhesive
- 135: Adhesive
- 235: Adhesive

## Claims

1. A physical quantity sensor comprising:
a deformable body in which strain occurs in response to a stress applied thereto;
a vibrator mounted to the deformable body such that the strain transmits to the vibrator, the vibrator vibrating with a frequency according to the strain or with an amplitude according to the strain; and
a processor bonded to the deformable body such that the strain does not substantially transmit to the processor, the processor processing a signal output from the vibrator.

2. The physical quantity sensor according to claim 1, further comprising a package mounted to the deformable body such that the strain does not substantially transmit to the package, the package accommodating the vibrator and the processor.

3. The physical quantity sensor according to claim 2, further comprising an adhesive joining the package to the deformable body, the adhesive having a small shear modulus.

4. The physical quantity sensor according to claim 2, further comprising a joining material joining the vibrator to the deformable body, the joining material having a larger shear modulus than the adhesive.

5. The physical quantity sensor according to claim 1, further comprising a joining material joining the vibrator to the deformable body, the joining material having a large shear modulus.

6. The physical quantity sensor according to claim 5, further comprising an adhesive bonding the processor to the deformable body, the adhesive having a smaller shear modulus than that of the joining material.

7. The physical quantity sensor according to claim 6, further comprising
a flexible substrate having the processor mounted thereon,
wherein the adhesive fixes the flexible substrate to the deformable body.

8. The physical quantity sensor according to claim 1, further comprising:
a flexible substrate having the processor mounted thereon; and
an adhesive fixing the flexible substrate to the deformable body, the adhesive having a small shear modulus.
